# EUROPÄISCHE PATENTANMELDUNG

(11) **EP 4 592 141 A1**
(43) Veröffentlichungstag der Anmeldung: **30.07.2025**
(21) Anmeldenummer: 24217410.0
(22) Anmeldetag: 04.12.2024
(51) Int. Cl.: B60Q 3/14, B60Q 3/54, B60Q 3/60, B60Q 3/64, B60Q 3/74

(54) **LEUCHTVORRICHTUNG FÜR EINEN INNENRAUM EINES FAHRZEUGS SOWIE DIE LEUCHTVORRICHTUNG AUFWEISENDES FAHRZEUG**

(30) Priorität: 24.01.2024 DE 102024200621
(71) Anmelder: Stellantis Auto SAS, 78300 Poissy (FR)
(72) Erfinder: FROMMANN, Markus, 65428 Rüsselsheim am Main (DE); BOECHER, Nicolas, 65428 Rüsselsheim am Main (DE)
(74) Vertreter: BCIP

(57) **Zusammenfassung**

Eine Leuchtvorrichtung (2) für einen Innenraum eines Fahrzeugs wird vorgeschlagen. Die Leuchtvorrichtung umfasst ein Gehäuse (4) mit einer wenigstens teilweise licht reflektierenden Rückwand (5) und mit einer flächigen transluzenten Abdeckung (3). Die Abdeckung weist eine der Rückwand (5) des Gehäuses (5) zugewandte Rückseite und eine der Rückseite gegenüberliegenden Vorderseite auf. Die Leuchtvorrichtung umfasst auch wenigstens eine Lichtquelle (6) zum Anleuchten der Rückwand (5) des Gehäuses (4), so dass die Rückseite der Abdeckung (3) von einem an der Rückwand (5) des Gehäuses (5) reflektierten Licht zum Erzeugen eines wenigstens bereichsweise im Wesentlichen flächig gleichmäßigen Leuchtens der Vorderseite der Abdeckung (3) angeleuchtet werden kann. Ferner wird ein Fahrzeug mit einem Innenraum vorgeschlagen, wobei in dem Innenraum wenigstens eine Leuchtvorrichtung (2) implementiert ist.

## Beschreibung

Die vorliegende Offenbarung betrifft eine Leuchtvorrichtung, insbesondere eine Leuchtvorrichtung für einen Innenraum eines Fahrzeugs sowie ein die Leuchtvorrichtung aufweisendes Fahrzeug.

Es sind Leuchtvorrichtungen für Fahrzeuginnenräume bekannt, welche als funktionale und/oder dekorative Leuchtvorrichtungen ausgebildet und in Abhängigkeit ihrer Zweckbestimmung in dem Fahrzeuginnenraum unterschiedlich angeordnet sein können. Es sind ferner Leuchtvorrichtungen mit indirekter Beleuchtung bekannt, in welchen beispielsweise transluzente Körper angeleuchtet und zum Leuchten gebracht werden. Damit die Leuchtvorrichtungen bestimmte Anforderungen an Leuchtdichteverteilung bzw. Leuchthomogenität erfüllen, werden spezielle strahlformende Optiken bzw. massive transluzente Körper eingesetzt, wodurch die Leuchtvorrichtung komplexer, schwerer und teuer werden.

Eine Aufgabe der vorliegenden Erfindung besteht darin, eine verbesserte Leuchtvorrichtung für einen Innenraum eines Fahrzeugs bereitzustellen, welche sich durch hohe Leuchthomogenität und einfache Herstellbarkeit sowie Wiederverwendbarkeit von Modulen auszeichnet.

Nach einem ersten Aspekt wird die obige Aufgabe mit einer Leuchtvorrichtung für einen Innenraum eines Fahrzeugs gelöst. Die Leuchtvorrichtung weist ein Gehäuse auf, wobei das Gehäuse eine wenigstens teilweise licht reflektierende bzw. streuende Rückwand und eine flächige transluzente bzw. lichtdurchlässige Abdeckung umfasst. Die transluzente Abdeckung kann insbesondere als Dekor- oder Verkleidungsteil der Leuchtvorrichtung ausgebildet sein.

Die transluzente Abdeckung weist eine der Rückwand des Gehäuses zugewandte Rückseite und eine der Rückseite gegenüberliegenden Vorderseite auf. Die transluzente Abdeckung kann insbesondere einen im Wesentlichen diffus lichtstreuenden optischen Körper mit einer wenigstens bereichsweise im Wesentlichen flachen Vorderseite aufweisen und so ausgebildet sein, dass beim Anleuchten der Rückseite ein diffuses Leuchten der Vorderseite visuell wahrgenommen werden kann.

Die Leuchtvorrichtung umfasst ferner wenigstens eine Lichtquelle zum Anleuchten der Rückwand des Gehäuses, so dass die Rückseite der Abdeckung von einem an der Rückwand des Gehäuses reflektierten Licht zum Erzeugen eines wenigstens bereichsweise im Wesentlichen flächig gleichmäßigen Leuchtens der Vorderseite der Abdeckung angeleuchtet werden kann. Das Gehäuse bildet somit eine Art Lichtkasten, in welchem die Rückwand des Gehäuses als Projektionsfläche für die wenigstens eine Lichtquelle fungieren kann. Die Rückwand des Gehäuses kann dabei als indirekte Lichtquelle zum Ausleuchten der Abdeckung fungieren, um eine erwünschte Leuchtdichteverteilung auf der Vorderseite der Abdeckung zu erzeugen. Insbesondere kann die Rückwand des Gehäuses so ausgebildet sein, dass auf der Vorderseite der transluzenten Abdeckung wenigstens eine Leuchtbereich bzw. Helligkeitsbereich mit einer im Wesentlichen gleichmäßig hohen Leuchtdichte und/oder eine Leuchtdichteverteilung gemäß Designvorgaben entsteht.

Die Rückwand des Gehäuses kann eine wenigstens teilweise diffus lichtstreuende Innenoberfläche aufweisen. Mittes der diffus lichtstreuenden Innenoberfläche kann insbesondere die Diffusivität des an der Innenoberfläche der Rückwand reflektierten Lichts erhöht werden, so dass etwaige scharfe Helligkeitskontraste in Leuchtdichteverteilung auf der Vorderseite der Abdeckung vermieden bzw. abgeschwächt werden können.

Die Rückwand des Gehäuses kann wenigstens bereichswese einen im Wesentlichen flächenstetigen Formverlauf aufweisen. Insbesondere kann sich der flächenstetige Formverlauf über einen zentralen Bereich der Rückwand bis in den Randbereich der Rückwand hinein erstrecken. Aufgrund des flächenstetigen Formverlaufs der Rückwand können Kanten und Ecken in der Rückwand des Gehäuses und die damit verbundenen Helligkeitssprünge in der Leuchtdichteverteilung auf der Vorderseite der Abdeckung vermieden bzw. reduziert werden. Insbesondere können dadurch scharfe Helligkeitsübergänge speziell im Randbereich der Abdeckung vermieden werden.

Insbesondere kann die Rückwand des Gehäuses so ausgebildet sein, dass die Leuchtdichteverteilung auf der Vorderseite der Abdeckung wenigstens einen sanften Hell-Dunkel-Übergang in wenigstens einem Randbereich der Abdeckung aufweist. Mittels der sanften Hell-Dunkel-Übergängen kann insbesondere eine visuell ansprechende, sanft abklingende Beleuchtung der Abdeckung der Leuchtvorrichtung realisiert werden.

In einigen Ausführungsbeispielen weist das Gehäuse eine längliche Form auf und die Rückwand des Gehäuses ist wenigstens abschnittsweise in Form eines länglichen Profils ausgebildet. Die wenigstens eine Lichtquelle kann wenigstens eine entlang wenigstens eines Längsendes des Gehäuses verlaufende längliche bzw. lineare Lichtquelle umfassen. Durch die längliche Profilform des Gehäuses und lineare Geometrie der Lichtquelle kann insbesondere erreicht werden, dass die Leuchtdichteverteilung auf der Vorderseite der Abdeckung weitgehend durch die Beschaffenheit der Rückwand, insbesondere im Wesentlichen unabhängig von der verwendeten Lichtquelle, definiert werden kann. Insbesondere kann die Lichtquelle durch eine andere lineare Lichtquelle ersetzt werden, ohne dabei das Leuchten der Vorderseite der Abdeckung zu beeinträchtigen.

Im Querschnitt betrachtet kann die Rückwand des Gehäuses eine Konturlinie mit einer variablen Kurvennormalen aufweisen, wobei die Konturlinie durch eine Abhängigkeit zwischen der Kurvennormalen und dem Abstand zu der Lichtquelle definiert sein kann. Insbesondere kann die Form der Konturlinie als Funktion des Abstands zu der Lichtquelle definiert sein, so dass bei Bedarf die Form des Gehäuses auf unterschiedliche Lichtmodule angepasst werden kann. Somit kann die Leuchtvorrichtung unter Verwendung von bereits vorhandenen, insbesondere für andere Anwendungen ausgelegten Lichtmodulen, kostengünstig realisiert werden.

In einigen Ausführungsbeispielen kann die wenigstens eine Lichtquelle wenigstens eine Light-Engine zum Erzeugen eines primären Lichts und wenigstens einen Lichtleiter zum Einkoppeln des durch die Light-Engine erzeugten Lichts in das Gehäuse bzw. zum Erzeugen eines sekundären Lichts umfassen, wobei sich der Lichtleiter wenigstens teilweise innerhalb des Gehäuses befinden kann. Insbesondere kann die wenigstens eine Light-Engine so montiert sein, dass sich die wärmeerzeugenden Leistungsteile der Light-Engine im Wesentlichen außerhalb des Gehäuses befinden, so dass eine Hitzeentwicklung innerhalb des Gehäuses reduziert werden kann. In einigen Ausführungsbeispielen weist der Lichtleiter optische Strukturen zum Streuen des aus dem Lichtleiter austretenden Lichts auf. Ferner kann die Lichtquelle einen dem Lichtleiter nachgeschalteten Diffusor zum diffusen Streuen des aus dem Lichtleiter ausgetretenen Lichts umfassen. Mittels der optischen Strukturen und/oder des Diffusors kann ein diffuses Licht zum Ausleuchten der Innenseite des Gehäuses bzw. der Rückwand des Gehäuses und der Rückseite der Abdeckung erzeugt werden, so dass die Diffusivität des auf die Rückseite der Abdeckung einfallenden Lichts insgesamt erhöht werden kann. Aufgrund der hohen Diffusivität des auf die Rückseite der Abdeckung fallenden Lichts können auf der Vorderseite der Abdeckung eine diffuse flächige Leuchtverteilung erzeugten werden, welche im Wesentlichen durch die Beschaffenheit der Rückwand des Gehäuses und weniger durch die verwendeten Lichtquellen bzw. Light-Engines definiert sind. Somit kann eine reproduzierbare Leuchtdichteverteilung unter Verwendung von unterschiedlichen Light-Engines bzw. Lichtmodulen erzeugt werden.

Die Rückwand des Gehäuses und die Abdeckung können insbesondere so ausgebildet sein, dass sich zwischen der Abdeckung und der Rückwand in wenigstens einem Randbereich ein sich nach außen graduell verjüngender Luftspalt bildet. Mittels des sich nach außen graduell verjüngenden Luftspalts kann insbesondere erreicht werden, dass auf der Vorderseite der Abdeckung ein besonders sanfter Hell-Dunkel-Übergang im Randbereich der Abdeckung entsteht.

In einigen Ausführungsbeispielen ist die Rückwand des Gehäuses als Freiformfläche ausgebildet. Mittels der als Freiformfläche ausgebildeten Rückwand können insbesondere unterschiedliche kundenspezifische Leuchtdichteverteilungen auf der Vorderseite der Abdeckung realisiert werden.

Nach einem zweiten Aspekt wird ein Fahrzeug bereitgestellt. Das Fahrzeug weist einen Innenraum auf, wobei in dem Innenraum wenigstens eine Leuchtvorrichtung gemäß dem ersten Aspekt implementiert ist. Vorteile und Wirkungen sowie Weiterbildungen des Fahrzeugs ergeben sich aus den Vorteilen und Wirkungen sowie Weiterbildungen der oben beschriebenen Leuchtvorrichtung. Zur Vermeidung von Wiederholungen wird daher in dieser Hinsicht auf die vorangegangene Beschreibung verwiesen.

Die Erfindung wird nun anhand der beigefügten Figuren näher erläutert. Für gleiche oder gleichwirkende Teile werden in den Figuren gleiche Bezugszeichen verwendet.
- Fig. 1: zeigt eine perspektivische Ansicht einer Innenraumbaugruppe eines Fahrzeugs mit einer Leuchtvorrichtung gemäß einem Ausführungsbeispiel,
- Fig. 2: zeigt eine perspektivische Detailansicht einer Leuchtvorrichtung gemäß einem Ausführungsbeispiel,
- Fig. 3: zeigt einen schematischen Querschnitt durch eine Leuchtvorrichtung gemäß einem Ausführungsbeispiel,
- Fig. 4: zeigt einen länglichen Querschnitt durch die Leuchtvorrichtung gemäß Fig. 3, und
- Fig. 5: zeigt Ergebnisse einer Lichtsimulation für eine Leuchtvorrichtung gemäß einem Ausführungsbeispiel.

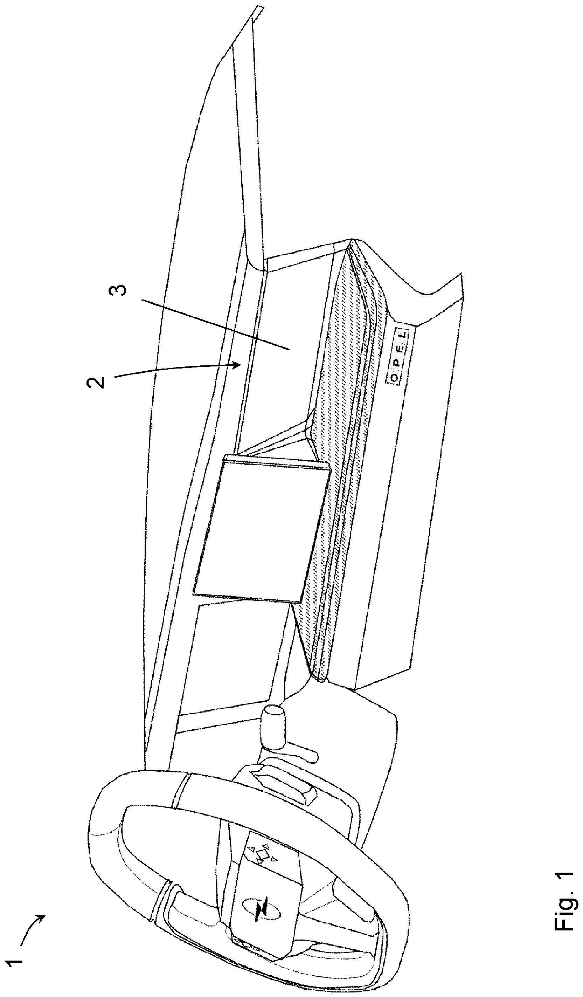

Fig. 1 zeigt eine perspektivische Ansicht einer Innenraumbaugruppe eines Fahrzeugs mit einer Leuchtvorrichtung gemäß einem Ausführungsbeispiel. Die Innenraumbaugruppe 1 ist als Armaturenbrettbaugruppe des Fahrzeugs ausgebildeten und umfasst die Leuchtvorrichtung 2 mit einer für die Fahrzeuginsassen visuell wahrnehmbaren lichtdurchlässigen Abdeckung 3 bzw. mit einem transluzenten Verkleidungsteil. Die Innenraumbaugruppe 1 ist in Fig. 1 aus der beifahrerseitigen Perspektive zu sehen. Die Abdeckung 3 weist eine für die Fahrzeuginsassen sichtbare Vorderseite und eine der Vorderseite gegenüberliegende Rückseite auf. Die Abdeckung 3 der Leuchtvorrichtung 2 ist so ausgebildet, dass durch Anleuchten der Rückseite der Abdeckung 3 mit einer Lichtquelle ein Leuchten auf der Vorderseite der Abdeckung 3 erzeugt werden kann.

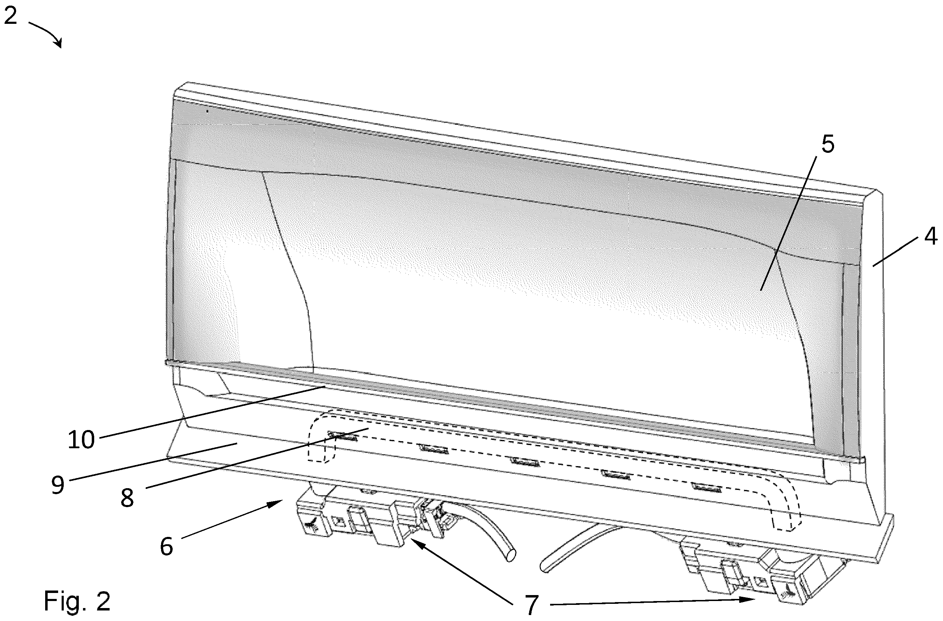

Fig. 2 zeigt eine perspektivische Detailansicht einer Leuchtvorrichtung gemäß einem Ausführungsbeispiel. Zur Verdeutlichung des Aufbaus der Leuchtvorrichtung 2 wird die Leuchtvorrichtung 2 in Fig. 2 ohne Abdeckung 3 gezeigt.

Die Leuchtvorrichtung 2 umfasst ein längliches Gehäuse 4 mit einer diffus lichtstreuenden Rückwand 5 und eine Lichtquelle 6 zum Anleuchten der Rückwand 5 des Gehäuses 4. Die Rückwand 5 dient somit als Projektionsfläche für das von der Lichtquelle 6 erzeugte Licht. Aufgrund der diffusen Lichtstreuung an der Rückwand 5 kann die Rückwand 5 als indirekte diffuse Lichtquelle zum Anleuchten der Abdeckung 3 dienen, wobei das Leuchten der Abdeckung 3 weitgehend durch die Beschaffenheit bzw. Form der Rückwand bestimmt werden kann.

Die Lichtquelle 6 umfasst zwei Lichtmodule bzw. Light-Engines 7 sowie einen Lichtleiter 8 zum Einkoppeln des von der Light-Engines erzeugten Lichts in das Gehäuse 4. Der Lichtleiter 8 ist länglich ausgebildet und verläuft im Wesentlichen entlang eines Längsendes des Gehäuses 4 innerhalb des Gehäuses 4. Die Leuchtvorrichtung 2 umfasst ferner eine Montageplatte 9 zum Montieren der Lichtquelle 6 bzw. der Light-Engines 7 und des Lichtleiters 8. Die Montageplatte 9 kann als Teil des Gehäuses 4 der Leuchtvorrichtung 2 ausgebildet sein.

Die Leuchtvorrichtung 2 umfasst ferner eine Lichtblende 10 zum Abblenden eines Teils des von dem Lichtleiter 8 abgegebenen Lichts.

Anhand einer Graustufendarstellung werden in Fig. 2 die unterschiedlich ausgeleuchteten Bereiche der Rückwand 5 des Gehäuses 4 verdeutlicht. Insbesondere ist eine graduelle Abnahme der Leuchtintensität von unten nach oben erkennbar, was im Wesentlichen auf die zunehmende Entfernung von der Lichtquelle 6 bzw. von dem diffusen Lichtleiter 8 zurückzuführen ist. Ferner sind graduelle Helligkeitsübergänge von dem mittleren helleren Bereich zu den seitlichen Randbereichen zu sehen.

Insbesondere wird im Wesentlichen die gesamte Fläche der Rückwand 5 einschließlich Randbereiche mit einer sanften Helligkeitsverteilung im Wesentlichen ohne abrupte Kontrastübergänge ausgeleuchtet. Diese graduellen Helligkeitsübergänge im Wesentlichen auf die Ausgestaltung des Gehäuses 4, insbesondere der Rückwand 4 des Gehäuses 5, zurückzuführen.

Das an der Rückwand 5 des Gehäuses 4 reflektierte Licht kann an die Rückseite der Abdeckung 3 gelangen, so dass die Vorderseite der transluzenten Abdeckung 3 diffus leuchtend erscheinen kann. Das Gehäuse 4 stellt somit einen Rückprojektionslichtlichtkasten zum Erzeugen eines diffusen Leuchtens auf der Vorderseite der Abdeckung 3.

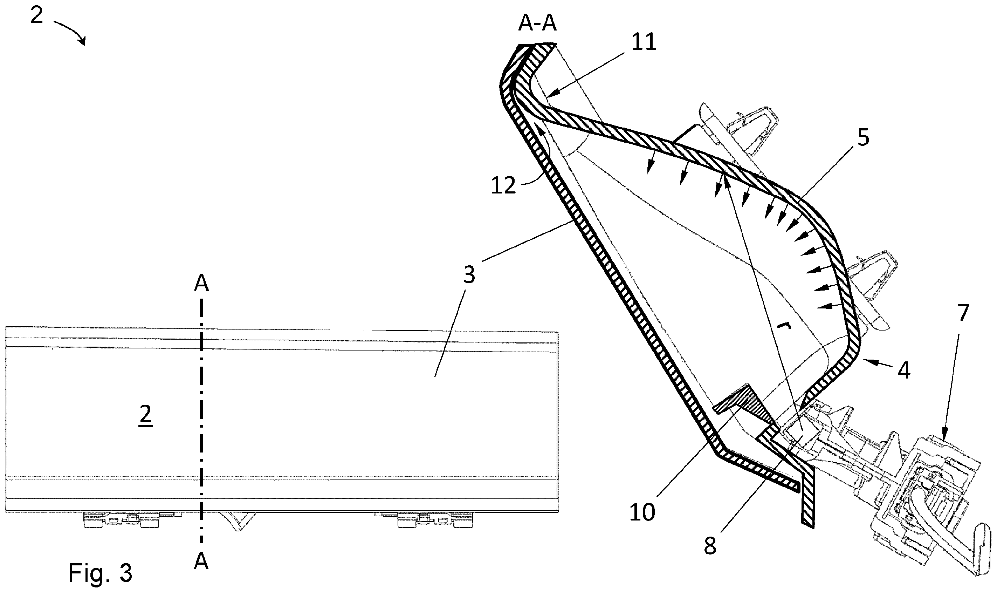

Fig. 3 zeigt einen schematischen Querschnitt durch eine Leuchtvorrichtung gemäß einem Ausführungsbeispiel. Insbesondere zeigt Fig. 3 einen Querschnitt in einer senkrechten A-A-Ebene, wie unten links im Bild eingeblendet.

In dem schematischen Querschnitt der Fig. 3 ist insbesondere die Konturlinie bzw. das Profil der Rückwand 5 des Gehäuses 4 sowie Randbereiche gut zu sehen. In einem oberen Randbereich 11 ist insbesondere ein sich nach oben graduell verjüngender Luftspalt 12 zwischen der Rückwand 5 des Gehäuses 4 und der Abdeckung 3 erkennbar. So nähern sich im Randbereich die Flächen der Projektionsfläche bzw. der Rückwand 5 und die der Abdeckung 3 über einen größeren Flächenverlauf an, ohne dass die Rückwand 5 abrupt in einem stumpfen Winkel an der Abdeckung bzw. an dem verkleidungsteil endet. Durch diese graduelle Annäherung der Rückwand 5 an die Abdeckung 3 im Bereich der Luftspalten 12 können besonders harmonisch auslaufende Leuchtbereiche auf der Vorderseite der Abdeckung 3 entstehen. In einigen Ausführungsbeispielen können das Gehäuse 4 und die Abdeckung 3 so ausgebildet sein, dass die Rückwand 5 des Gehäuses 4 und die Abdeckung 3 in wenigstens einem Randbereich tangential ineinander einlaufen.

Zur Verdeutlichung des Konturlinienverlaufs werden Kurvennormalen als Pfeile symbolisch dargestellt. Die Kurvennormalen ändern ihre Ausrichtung graduell entlang der Konturlinie der Rückwand 5. Dabei weisen die von dem Lichtleiter 8 gleich entfernten Punkte der Rückwand 5 jeweils gleich gerichtete Kurvennormalen auf.

Zur Erhöhung der Leuchthomogenität der Rückwand 5 wird in erster Näherung versucht, die Rückwand so zu gestalten, dass die Rückwand 5 bezogen auf die Lichtquelle bzw. auf den Lichtleiter 8 einen möglichst konstanten Abstand r aufweist. Ein gleicher Abstand zu der Lichtquelle bedeutet insbesondere eine gleiche Leuchtdichte des auf die Rückwand 5 einfallenden Lichts. Die Einhaltung des gleichen Abstands zu der Lichtquelle bzw. zu dem Lichtleiter 8 als indirekte Lichtquelle ist jedoch nicht in allen Bereichen des Gehäuses 4 möglich. In Bereichen, wo dies nicht möglich ist, wird die Projektionsfläche über eine entsprechende an Winkelung der Projektionsfläche bezüglich der Lichtquelle feinjustiert.

Es wird ein Formenverlauf der Rückwand 5 vorgeschlagen, welche durch eine funktionale Abhängigkeit der Kurvennormalen von dem jeweiligen Abstand r von der Lichtquelle bzw. von dem Lichtleiter 8 definiert wird. Anhand der funktionalen Abhängigkeit der Kurvennormalen von dem Abstand r von der Lichtquelle kann insbesondere die Rückwand 5 des Gehäuses 4 auf unterschiedliche Lichtquellen angepasst werden, so dass die Prinzipien der hier beschriebenen Leuchtvorrichtung 2 auf andere Systeme, beispielsweise auf verschiedene Leuchtvorrichtungen, insbesondere auf Leuchtvorrichtungen mit verschiedenen Lichtmodulen, angewandt werden können.

In dem gezeigten Ausführungsbeispiel ist der Lichtleiter 8 als klarer Lichtleiter ausgebildet. In einigen Ausführungsbeispielen weist der Lichtleiter 8 optische Strukturen zum Streuen des aus dem Lichtleiter 8 austretenden Lichts auf. Dem Lichtleiter 8 kann zusätzlich ein Diffusor zum diffusen Streuen des aus dem Lichtleiter 8 ausgetretenen Lichts nachgeschaltet sein. Insbesondere kann der Diffusor in die Leuchtvorrichtung 1 angrenzend an den Lichtleiter 8 integriert sein. Mittels der optischen Strukturen und/oder des zusätzlichen Diffusors kann somit die Diffusivität des auf die Rückwand 5 des Gehäuses 4 eintreffenden Lichts erhöht werden, so dass die Rückseite der Abdeckung besonders gleichmäßig angeleuchtet werden kann.

Die Lichtblende 10 ist dazu ausgebildet, die Rückseite der Abdeckung 3 von dem Lichtleiter 8 abzuschatten, so dass die Rückwand im Wesentlichen durch das an der Rückwand 5 des Gehäuses 4 reflektierten Licht ausgeleuchtet wird. Somit kann die Ausleuchtung der Rückseite der Abdeckung 3 und somit auch die Leuchtdichteverteilung auf der Vorderseite der Abdeckung 3 maßgeblich durch die Form bzw. Beschaffenheit der Rückwand 5 des Gehäuses bestimmt.

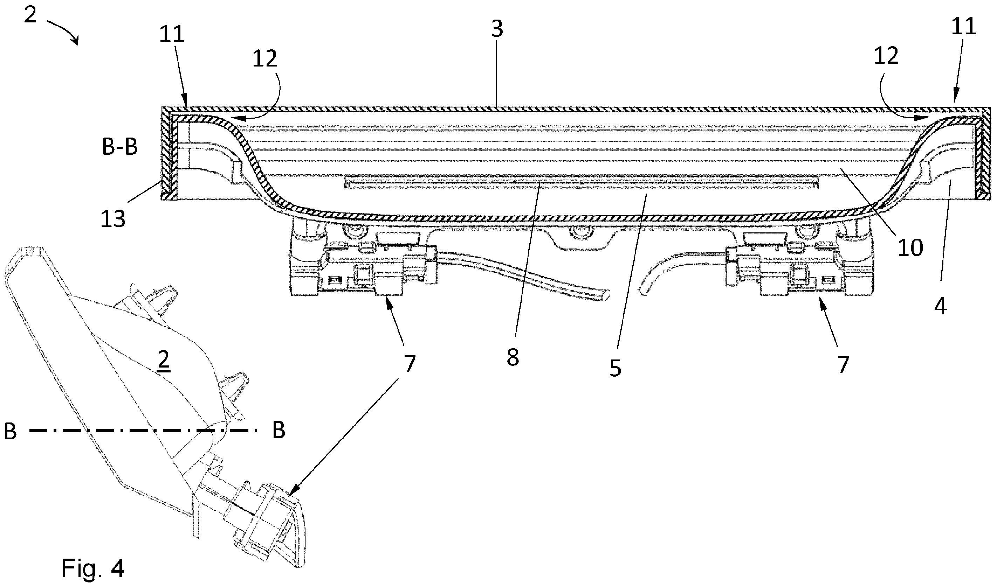

Fig. 4 zeigt einen länglichen Querschnitt durch die Leuchtvorrichtung gemäß Fig. 3. Insbesondere zeigt Fig. 4 einen Querschnitt in einer waagereichten B-B-Ebene, wie unten links im Bild eingeblendet.

In dem länglichen Querschnitt der Fig. 4 ist insbesondere der seitliche Formverlauf der Rückwand 5 des Gehäuses gut zu sehen. Insbesondere sind seitliche Randbereiche 11 mit jeweiligen sich nach außen graduell verjüngenden Luftspalten 12 deutlich zu sehen. In dem gezeigten Ausführungsbeispiel weist die Abdeckung 3 einen Rahmen 13 auf, welcher das gesamte Gehäuse 4 umrahmt und als Halterung für die Abdeckung fungieren kann. Die Abdeckung 3 samt Rahmen 13 kann insbesondere einstückig ausgebildet sein.

Die 10 Lichtblende erstreckt sich im Wesentlichen über die gesamte Breite des Gehäuses 4, so dass die Abdeckung 3 über die gesamte Länge des Lichtleiters 8 von einer direkten Bestrahlung durch das von dem Lichtleiter 8 abgegebenen Licht abgeschattet werden kann.

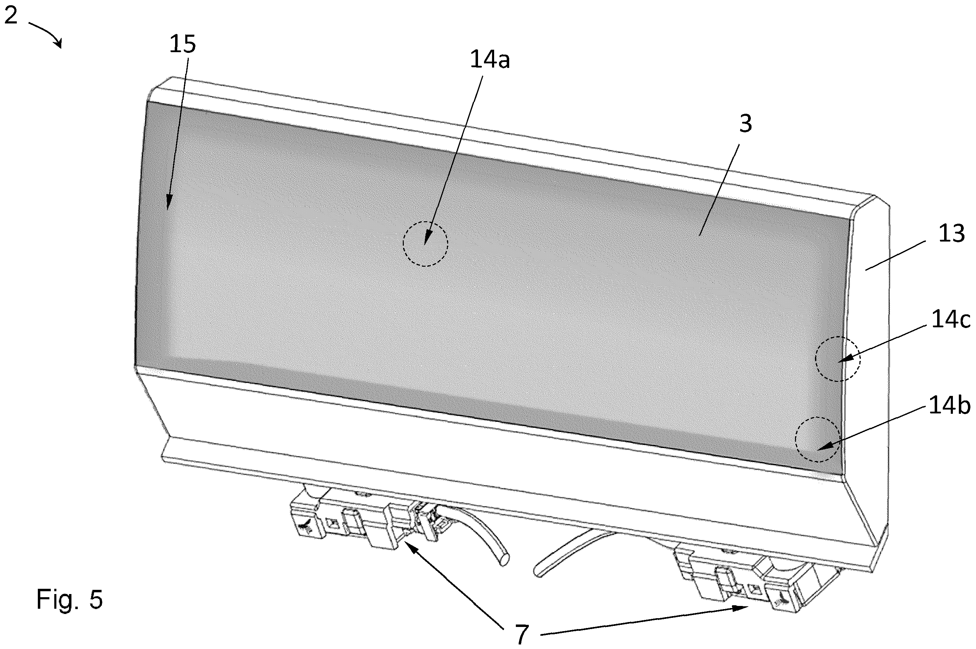

Fig. 5 zeigt Ergebnisse einer Lichtsimulation für eine Leuchtvorrichtung gemäß einem Ausführungsbeispiel. Insbesondere wird in Fig. 5 eine simulierte Leuchtdichtenverteilung über die Vorderseite der Abdeckung 3 als Graustufenverteilung visualisiert.

Anhand der Graustufendarstellung sind auf der Vorderseite der Abdeckung 3 unterschiedliche Helligkeitsbereiche 14a, 14b, 14c sowie Übergangsbereiche 15 zwischen helleren und dunkleren Bereichen erkennbar. Insbesondere ist in der Mitte der Abdeckung 3 ein im Wesentlichen rechteckiger Beleuchtungsbereich 14a mit einer verhältnismäßig hohen Helligkeit und mit einem verhältnismäßig niedrigem Helligkeitsgradienten erkennbar.

Die Helligkeitsverteilung weist Übergangsbereiche 16 mit stärkeren Helligkeitsgradienten, insbesondere in Randbereichen der Abdeckung 3 auf. Insbesondere fällt die Helligkeit von dem mittleren Helligkeitsbereich 14a über einen Zwischenbereich 14b zu einem verhältnismäßig dunklen bzw. unbeleuchteten Randbereich 14c graduell ab. Die Gradualität der Helligkeitsänderung werden anhand der gestrichelt eingezeichneten kreise verdeutlicht.

Wie an den gestrichelt eingezeichneten Kreisen deutlich zu erkennen ist, weist die Abdeckung in dem mittleren Helligkeitsbereich 14a einen sehr geringen bzw. visuell kaum wahrnehmbaren Helligkeitsgradienten auf. An den Übergangsbereichen 15 bzw. Zwischenbereichen 14b hingegen sind die Helligkeitsgradienten bzw. Helligkeitsänderungen deutlicher erkennbar.

Insgesamt weist die Helligkeitsverteilung einen sanften Helligkeitsverlauf mit einem breiten Helligkeitsplateau im mittleren Helligkeitsbereich 14a und einer sanft abklingenden Helligkeit zu dem Randbereich 14c.

Mittels der Leuchtvorrichtung 2 kann somit ein flächiges Leuchten mit einer besonders ansprechenden Helligkeitsverteilung ohne abrupte Helligkeitssprünge und ohne scharte Helligkeitsübergänge erzeugt werden. Insbesondere kann anhand der sanft ausklingenden Beleuchtungsstärke bzw. Helligkeit der Abdeckung eine Tiefenwirkung als zusätzlicher Effekt erzeugt werden. Zudem kann ein sich im Wesentlichen über die gesamte Fläche der Abdeckung erstreckender Helligkeitsbereich, abgesehen von Randbereichen, mit besonders hoher Leuchthomogenität erzeugt werden.

Aufgrund der Formgestaltung der Rückwand des Gehäuses kann eine gewünschte Leuchtdichteverteilung mit unterschiedlichen Lichtquellen, insbesondere auf Basis von bestehenden Lichtmodulen nach dem Baukastenprinzip, im Wesentlichen ohne zusätzlichen Entwicklungsaufwand realisiert werden. Die Leuchtvorrichtung 2 kann somit für eine Ambientebeleuchtung eines Fahrzeugs für eine besonders angenehme lichttechnische Gestaltung des Fahrzeuginnenraums eingesetzt werden. Mit der hier vorgestellten Leuchtvorrichtung können insbesondere weitgehend homogene Leuchtdichteverteilungen über verhältnismäßig große Flächen mit sanften Übergängen zwischen beleuchteten und unbeleuchteten Bereichen realisiert werden. Insbesondere aufgrund des flächenstetigen Formverlaufs der Rückwand des Gehäuses können unerwünschte Inhomogenitäten bedingt durch etwaige Ecken und Kanten des Gehäuses vermieden werden.

Obwohl zumindest eine beispielhafte Ausführungsform in der vorhergehenden Beschreibung gezeigt wurde, können verschiedene Änderungen und Modifikationen vorgenommen werden. Die genannten Ausführungsformen sind lediglich Beispiele und nicht dazu vorgesehen, den Gültigkeitsbereich, die Anwendbarkeit oder die Konfiguration der vorliegenden Offenbarung in irgendeiner Weise zu beschränken. Vielmehr stellt die vorhergehende Beschreibung dem Fachmann einen Plan zur Umsetzung zumindest einer beispielhaften Ausführungsform zur Verfügung, wobei zahlreiche Änderungen in der Funktion und der Anordnung von in einer beispielhaften Ausführungsform beschriebenen Elementen gemacht werden können, ohne den Schutzbereich der angefügten Ansprüche und ihrer rechtlichen Äquivalente zu verlassen. Außerdem können nach den hier beschriebenen Prinzipien auch mehrere Module bzw. mehrere Produkte miteinander verbunden werden, um weitere Funktionen zu erhalten.

### Bezugszeichenliste

- 1: Innenraumbaugruppe
- 2: Leuchtvorrichtung
- 3: Abdeckung
- 4: Gehäuse
- 5: Rückwand
- 6: Lichtquelle
- 7: Light-Engine
- 8: Lichtleiter
- 9: Trägerplatte
- 10: Lichtblende
- 11: Randbereich
- 12: Luftspalt
- 13: Rahmen
- 14a: Helligkeitsbereich
- 14b: Helligkeitsbereich
- 14c: Helligkeitsbereich
- 15: Übergangsbereich

## Patentansprüche

1. Leuchtvorrichtung für einen Innenraum eines Fahrzeugs, umfassend:
- ein Gehäuse (4), umfassend eine wenigstens teilweise licht reflektierende Rückwand (5) und eine flächige transluzente Abdeckung (3) mit einer der Rückwand (5) des Gehäuses (5) zugewandten Rückseite und mit einer der Rückseite gegenüberliegenden Vorderseite, und
- wenigstens eine Lichtquelle (6) zum Anleuchten der Rückwand (5) des Gehäuses (4), so dass die Rückseite der Abdeckung (3) von einem an der Rückwand (5) des Gehäuses (5) reflektierten Licht zum Erzeugen eines wenigstens bereichsweise im Wesentlichen flächig gleichmäßigen Leuchtens der Vorderseite der Abdeckung (3) angeleuchtet werden kann.

2. Leuchtvorrichtung nach Anspruch 1, wobei die Rückwand (5) des Gehäuses (4) eine wenigstens teilweise diffus lichtstreuende Innenoberfläche aufweist.

3. Leuchtvorrichtung nach Anspruch 1 oder 2, wobei die Rückwand (5) des Gehäuses (4) wenigstens bereichsweise einen im Wesentlichen flächenstetigen Formverlauf aufweisen.

4. Leuchtvorrichtung nach einem der vorhergehenden Ansprüche, wobei die Rückwand (5) des Gehäuses (4) so ausgebildet ist, dass die Leuchtdichteverteilung auf der Vorderseite der Abdeckung (3) wenigstens einen sanften Hell-Dunkel-Übergang in wenigstens einem Randbereich der Abdeckung (3) aufweist.

5. Leuchtvorrichtung nach einem der vorhergehenden Ansprüche, wobei das Gehäuse (4) eine längliche Form aufweist, und wobei die Rückwand (5) des Gehäuses (4) wenigstens abschnittsweise in Form eines länglichen Profils ausgebildet ist, wobei die wenigstens eine Lichtquelle (6) wenigstens eine wenigstens teilweise entlang wenigstens eines Längsendes des Gehäuses (4) verlaufende längliche Lichtquelle (8) umfasst.

6. Leuchtvorrichtung nach Anspruch 5, wobei im Querschnitt betrachtet die Rückwand (4) des Gehäuses (5) eine Konturlinie mit einer variablen Kurvennormalen aufweist, und wobei die Konturlinie durch eine Abhängigkeit zwischen der Kurvennormalen und dem Abstand zu der Lichtquelle (8) definiert ist.

7. Leuchtvorrichtung nach einem der vorhergehenden Ansprüche, wobei die wenigstens eine Lichtquelle (6) wenigstens eine Light-Engine (7) zum Erzeugen eines primären Lichts und wenigstens einen Lichtleiter (8) zum Einkoppeln des durch die Light Engine erzeugten Lichts in das Gehäuse, und wobei sich der Lichtleiter (8) wenigstens teilweise innerhalb des Gehäuses (4) befindet.

8. Leuchtvorrichtung nach einem der vorhergehenden Ansprüche, wobei die Rückwand des Gehäuses (4) und die Abdeckung (3) so ausgebildet sind, dass sich zwischen der Abdeckung (3) und der Rückwand (5) in wenigstens einem Randbereich ein sich nach außen graduell verjüngender Luftspalt (12) bildet.

9. Leuchtvorrichtung nach einem der vorhergehenden Ansprüche, wobei die Rückwand (5) des Gehäuses (4) wenigstens teilweise als Freiformfläche ausgebildet ist.

10. Fahrzeug, wobei das Fahrzeug einen Innenraum umfasst, und wobei in dem Innenraum wenigstens eine Leuchtvorrichtung (2) gemäß einem der vorhergehenden Ansprüche implementiert ist.
